# EUROPEAN PATENT SPECIFICATION

(11) **EP 3 492 873 B1**
(45) Date of publication and mention of the grant of the patent: **04.11.2020**
(21) Application number: 17204660.9
(22) Date of filing: 30.11.2017
(51) Int. Cl.: G01C 21/34, G06Q 10/06, G08G 1/00, G06Q 10/04, G06Q 50/30

(54) **BATTERY PACK OPTIMIZATION TRANSPORT PLANNING METHOD**
BATTERIEPACKOPTIMIERUNGS-TRANSPORTPLANUNGSVERFAHREN
PROCÉDÉ DE PLANIFICATION DE TRANSPORT D'OPTIMISATION DE BLOC BATTERIE

(43) Date of publication of application: 05.06.2019
(73) Proprietor: EINRIDE AB, 411 29 Göteborg (SE)
(72) Inventor: FALCK, Robert, 113 28 Stockholm (SE)
(74) Representative: AWA Sweden AB

(56) References cited:
- GB-A- 2 539 422
- US-A1- 2012 022 904
- US-A1- 2016 247 106
- US-A1- 2017 227 369

## Description

### TECHNICAL FIELD OF THE INVENTION

The present invention relates to the field of transport planning methods. More specifically, the present invention relates to the field of transport planning methods for optimizing battery pack performance in autonomous or semi-autonomous vehicles.

### BACKGROUND

Autonomous vehicles have been a hot topic during the last decade, and with the rapid pace of technological advancements being made in the area of computer science, it may very well soon become a reality and thereby change the automotive and transportation industry as we see it today.

The expected advantages when going from human operated vehicles to autonomous or semi-autonomous vehicles are not only related to safety enhancements due to removal of human error (which is considered to be the primary cause of accidents), but also improved energy efficiency and time management due to the immense amounts of information being accessible to connected vehicles. An example in reference to the latter is that large traffic jams may be reduced or even completely mitigated by means of efficient route planning. Such features are readily available in connected GPS devices today, but it is imagined that it the effects of such technology will even be more pronounced when moving to a largely autonomous fleet.

Furthermore, along with the research of autonomous vehicles in recent years, many relating techniques such as e.g. sensing techniques, object identifications techniques and positioning techniques have been under development in order to satisfy the demands of the autonomous vehicles. However, in order for the autonomous vehicles to truly replace the human operated vehicle fleet technological advancements on a system level must be achieved. Even more so when one is considering the fact that alternative fuel vehicles (such as electric vehicles) are going to be the standard in the future, and issues related to vehicle ranges and refueling will be an obstacle in order to advance the autonomous vehicle industry from an experimental or prototype stage, particularly if no drastic improvements in those are made in those technological areas.

US 2012/022904 A1 discloses a vehicle management system in which the energy consumption for candidate routes is determined for various types of vehicles wherein a route with the best energy consumption with a type of vehicle is selected.

US 2016/247106 A1 discloses a method for managing a fleet of autonomous, electric vehicles in which each vehicle selects a route and parking location to answer to transportation requests by users.

GB 2 539 422 A discloses a scheduling system for taxi providers in which the provider selects an electric vehicle from the plurality of electric vehicles which has a sufficient battery charge to perform the requested journey. US 2017/227369 A1 discloses a navigation system for an electric vehicle in which the energy consumption for each of a plurality of routes is calculated. If the required energy is higher than the available energy, the availability of at least one charge station on one of the plurality of routes is determined.

Thus, there is a need for a new and improved method and system for transport planning which is reliable, efficient and suitable for a modern autonomous vehicle fleet utilizing electric drive systems.

### SUMMARY OF THE INVENTION

It is therefore an object of the present invention to provide a method and system for transport assignment planning which alleviate all or at least some of the above-discussed problems.

This object is at least achieved by means of a method and system as defined in the appended claims.

The term exemplary is in the present context to be interpreted as serving as an instance, example or illustration.

According to a first aspect of the present invention, there is provided a method for transport assignment planning, where the method comprises receiving a transport assignment, where the transport assignment comprises a geographical start point and a geographical end point. Further, the method comprises receiving vehicle information about the status of a plurality of electric vehicles in a vehicle fleet, each vehicle comprising at least one battery pack, wherein the vehicle information comprises a state of charge for each battery pack. Further, the method comprises receiving route information about a plurality of geographical road routes between the geographical start point and the geographical end point, wherein the route information comprises information about expected power consumption for each vehicle for each geographical road route, determining a number of required charge cycles for each electric vehicle for each geographical road route based on the received vehicle information and the route information, and assigning a geographical road route and an electric vehicle for carrying out the transport assignment based on the determined number of required charge cycles such that the assigned electric vehicle is selected from a sub-group of electric vehicles which can complete the transport assignment with a number of charge cycles that are below a predefined threshold.

Thus presenting a method for efficiently optimizing a transport route selection for increasing battery utilization efficiency and battery pack lifetime in a vehicle fleet comprising electric vehicles, in particular autonomous or semi-autonomous electric vehicles. The inventive method can be used to assign a road route and an electric vehicle based on several factors which can be optimized not only to ensure time efficiency but also to optimize battery performance and accordingly increase the life expectancy of each vehicle, thereby reducing the overall costs for the vehicle fleet. A vehicle fleet is in the present context to be understood as two or more vehicles. Moreover, the electric vehicles are preferably autonomous or semi-autonomous electric vehicles.

The present invention is based on the realization that for an entire fleet of electric vehicles, in particular electric transportation vehicles, to be utilized at good energy and cost efficiency, one must take into account several parameters when suggesting or assigning route between a geographical starting point and geographical end point. By means of recent technological advancements in terms of electric vehicles, processing power, sensing technology, communication technology, etc., it is possible to build a system which can gather the necessary data and designate various assignments to the most suited vehicle and operate a whole fleet of electric vehicles at a better energy and operational efficiency than previously possible. Moreover, the overall costs can be reduced as a consequence of the increased operational efficiency and the reduced need for vehicle maintenance (e.g. battery pack replacements). For example, in a situation where two or more vehicles are eligible to perform a transport assignment in terms of that both of the vehicles are capable to perform the task within a predefined time frame, the system is preferably configured to select the vehicle which will execute the assignment with the least amount of wear and tear on the batteries. However, the amount of charge cycles allowable may be predefined by an upper threshold (or a range) in order to allow for other parameters to prevail (e.g. state of health for each battery pack). In particular, retrieving the state of health for each battery pack is advantageous in that it allows for a more accurate prediction of how many battery charge cycles are required to travel a certain distance (i.e. complete a transport assignment), since worn out batteries can be assumed to provide less range than newer ones. Thus, the vehicle information may in some exemplary embodiments include a state of health for each battery pack.

In other words, the method according to the first aspect of the invention uses information relating to the state/level of charge for each electric vehicle in the fleet and route information comprising expected power consumption and available charging stations in order to optimize a transport schedule. The optimization may be focused on any number of priorities, e.g. time, power consumption, battery lifetime, etc., by configuring a vehicle management system controller accordingly. Thus, the present invention provides for immense versatility and customization to fit a specific need. The vehicle information may for example be directly or indirectly provided by each vehicle by means of suitable communication equipment (e.g. a radio communication system), while the route information may be retrieved from a (remote) database.

In accordance with an exemplary embodiment of the present invention, the step of assigning a geographical road route and an electric vehicle for carrying out the transport assignment is such that the assigned electric vehicle is the electric vehicle which can complete the transport assignment with a lowest number of charge cycles out of the plurality of electric vehicles. Thus, with two or more available electric vehicles, each being eligible for completing the requested transport assignment, the one which can complete the assignment with the lowest number of battery charge cycles is chosen. Stated differently, the fleet of electric vehicles can be said to form a "battery pack pool", where each battery (pack) is put through several charge cycles during its lifetime wherefore the entire "battery pack pool" has a finite number of available charge cycles. In order to maximize the utilization of the vehicle fleet over time it is desirable to reduce the cycling as much as possible across the entire fleet. Accordingly, by selecting a vehicle which can complete the assignment within e.g. two cycles instead of three or four, the "battery pack pool" is worn out by the least amount, thereby increasing the life expectancy of the batteries and consequently of the entire fleet of electric vehicles.

Further, in accordance with another exemplary embodiment the method further comprises sending information about the transport assignment and information about the assigned geographical road route to the assigned electric vehicle. Thus, if the method is implemented in a system controller external to the vehicle fleet, the selected vehicle will receive its instructions therefrom. Advantageously, the method is implemented in a system common to a vehicle fleet instead of distributed locally in each vehicle because of the advantages in available processing power.

Even further, in yet another exemplary embodiment of the present invention, each wherein at least one of the plurality of electric vehicles is/are semi-autonomous and wherein the route information further comprises information about portions of each of the geographical road routes where there is a need for remote assistance, the method further comprising: receiving assistance availability information comprising information about an availability of remote assistance, and wherein the step of assigning a geographical road route is further based on the received assistance availability information and the received route information.

In more detail, some geographical road routes may be hard to complete autonomously, for example there may be passages through dense urban areas or there may be roadside constructions which require a human operator to remotely control the vehicle (either by only making specific decisions upon request or by complete control by means of e.g. a joystick). However, if there are no operators available at the expected time in which they will be required, these routes will be flagged as unavailable and therefore removed from the evaluation and assignment process. This is in order to avoid vehicles standing still while waiting for remote resistance to be available and instead be prompted to a "non-optimal route" which may require a higher number of battery charging cycles to complete, but is better from an operational efficiency perspective. However, this is as mentioned in the foregoing, customizable and in certain situations it may be more efficient to have the vehicle standing still.

Yet further, in accordance with another exemplary embodiment of the present invention, the transport assignment comprises information about the freight and wherein the vehicle information further comprises information about freight capacity. Hereby, it is possible to optimize the transports from a capacity utilization perspective in order to increase the capacity utilization ratio for the whole vehicle fleet.

In accordance with yet another exemplary embodiment of the present invention, the transport assignment comprises a time range for pickup and a time range for delivery, and wherein the method further comprises:
evaluating which of the plurality of electric vehicles are capable of performing the transport assignment using which geographical road route(s) within the time range for pickup and the time range for delivery. Accordingly, the method may comprise selecting a vehicle from a sub-group of vehicles from the fleet, where the sub-group is formed by only those vehicles that can complete the assignment within the predefined time limits. This is in order to avoid processing of unnecessary data if it can be determined already from the start that some vehicles are incapable of performing a timely transport (e.g. if some of the vehicles are at very different geographical locations in reference to each other). Moreover, the sub-group or subset of vehicles may be formed due to other constraints such as for example that the vehicles with a battery pack having a state of health below a predefined threshold should not carry more than e.g. 80% of the rated cargo weight (retrieved from the freight data in the transport assignment). Other similar constraints for forming subsets of vehicles from the entire vehicle fleet are also feasible.

Further, in accordance with another exemplary embodiment, the method further comprises: receiving charging station data comprising information about availability at each charging station present along each geographical road route; estimating a required charging time for each electric vehicle based on the vehicle information and the route information; wherein the step of assigning a geographical road route and an electric vehicle is further based on the estimated required charging time and the charging station data. By receiving information about the availability at each charging station along each geographical road route, one can factor in queuing at each station for the transport assignment. For example, if several vehicles are heading towards the same geographical end point one can assign different routes if there is a need for recharging during the trip. Thus, one can use this data to minimize travel time or to maximize charging time for any given situation.

Moreover, in accordance with yet another exemplary embodiment of the present invention, the method further comprises receiving information about electricity prices, and wherein the step of assigning a geographical road route and electric vehicle comprises based on the information about electricity prices such that the total cost of the transport assignment is within a predefined interval. In more detail, there may be certain situations in which the transport can be delayed until the price for electricity (i.e. a large part of the transport cost) is at a more advantageous level, or one can time such that the recharging is performed during non-peak hours of the day in order to reduce the load on the power grid and reduce costs.

In accordance with another exemplary embodiment of the present invention, the vehicle information comprises information about a current position or expected position of each electric vehicle, and wherein the geographical road routes include relocating each electric vehicle from the current position or the expected position to the geographical start point. This improves the accuracy of the transport planning method since the relocation distance is calculated in the assigned geographical road route.

Further, in accordance with yet another exemplary embodiment of the present invention, the method further comprises adding the received transport assignment to a list comprising at least one transport assignment, and wherein the step of assigning a geographical road route and an electric vehicle for carrying out the transport assignment is carried out for all the transport assignments in said list such that a total number of charge cycles for all transport assignments is below a predefined threshold. Accordingly, the transport planning method can be used to take into account future transports as well in order to reduce the total number of charge cycles used for all of the assignments within the same list may be kept as low as possible. The list may for example only include transport assignments within the same region in order to avoid unnecessary processing of data.

Further, in accordance with another aspect of the present invention, there is provided a system for transport assignment planning comprising a controller configured to: receive a transport assignment, wherein the transport assignment comprises a geographical start point a geographical end point; receive vehicle information about the status of a plurality of electric vehicles in a vehicle fleet, each vehicle comprising at least one battery pack, wherein the vehicle information comprises a state of charge for each battery pack; receive route information about a plurality of geographical road routes between the geographical start point and the geographical end point wherein the route information comprises information about expected power consumption for each vehicle for each geographical road route; determine a number of required charge cycles for each electric vehicle for each geographical road route based on the received vehicle information and the route information; and assign a geographical road route and an electric vehicle for carrying out the transport assignment based on the determined number of required charge cycles such that the assigned electric vehicle is selected from a sub-group of electric vehicles which can complete the transport assignment with a number of charge cycles that are within a predefined interval.

With this aspect of the invention, similar advantages and preferred features are present as in the previously discussed first aspect of the invention. The system may for example further include a database from which necessary data can be retrieved, such as e.g. the route information about the plurality of geographical road routes.

In accordance with an exemplary embodiment of the invention, the control unit is further configured to send information about the transport assignment and information about the assigned route to the assigned electric vehicle.

These and other features of the present invention will in the following be further clarified with reference to the embodiments described hereinafter.

### BRIEF DESCRIPTION OF THE DRAWINGS

For exemplifying purposes, the invention will be described in closer detail in the following with reference to embodiments thereof illustrated in the attached drawings, wherein:
Fig. 1 is a schematic illustration of a system for transport assignment planning in accordance with an embodiment of the present invention;
Fig. 2 is a flow chart representation of a method for transport assignment planning in accordance with another embodiment of the present invention.

### DETAILED DESCRIPTION

In the following detailed description, preferred embodiments of the present invention will be described. However, it is to be understood that features of the different embodiments are exchangeable between the embodiments and may be combined in different ways, unless anything else is specifically indicated. Even though in the following description, numerous specific details are set forth to provide a more thorough understanding of the present invention, it will be apparent to one skilled in the art that the present invention may be practiced without these specific details. In other instances, well known constructions or functions are not described in detail, so as not to obscure the present invention.

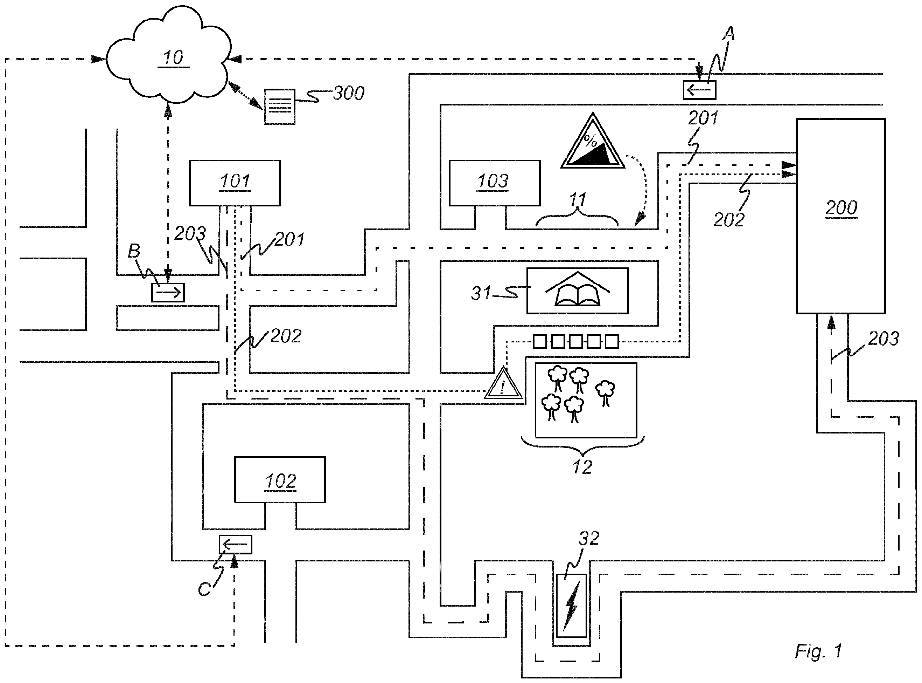

Fig. 1 shows a schematic overview illustration of a system for transport assignment planning in accordance with an embodiment of the present invention. The system has a controller 10, here schematically represented by a cloud based system, which is configured to receive a transport assignment (e.g. from an external source). The controller 10 is preferably realized as a software controlled processor. However, the controller may alternatively be realized wholly or partly in hardware. The transport assignment comprises at least a geographical start point and a geographical end point. In this example, the start point will be represented by a first building 101, where a pick-up of a package is scheduled. The geographical end point will be represented by a warehouse building 200 to which the package is to be delivered. The other buildings 102, 103 indicated in the figure may be associated with other (future or historical) transport assignments.

Further, the controller 10 is configured to receive vehicle information about the status of a plurality of electric vehicles A, B, C in a vehicle fleet. Each vehicle A, B, C accordingly has one or more batteries, in the following referred to as a "battery pack" for simplicity. The received vehicle information includes at least a state of charge for each battery pack. However, in the received vehicle information may further comprise additional information such as a state of health for each battery pack (i.e. how worn out the battery is), freight capacity for each vehicle A, B, C, etc. Here, a first electric vehicle A has a state of charge at 95%, a second electric vehicle has a state of charge at 30% and a third electric vehicle C has a state of charge at 85%. For simplicity, it can be assumed that each vehicle holds the same amount of cargo and a state of health of each battery pack is at the same level.

Moving on, the controller 10 is further configured to receive route information about a plurality of geographical road routes 201, 202, 203 between the geographical start point 101 and the geographical end point (naturally the skilled reader realizes that there are more possible routes in the illustrated embodiment, however, for the sake of brevity the number is here reduced to three routes). The route information includes information about expected power consumption for each separate geographical road route as well as information about available charging stations along each separate geographical road route. For example, the expected power consumption may be 140 kWh for the first route 201, 125 kWh for the second route 202, and 225 kWh for the third route 203. Even though the first route 201 appears to be shorter than the second route 202, the expected power consumption for the first route 201 is higher due to an inclined passage 11. Thus the expected power consumption is not only based on distance but may include several additional parameters such as topography, traffic, weather (temperature), etc. in order to improve the accuracy of the estimation.

Further, the vehicle information further includes information about the current position of each electric vehicle A, B, C. Thus, in the present example, the geographical road routes, 201, 202, 203 further include relocating each of the electric vehicles from their current positions to the geographical start point 101. Consequently, the expected power consumption will be lower for the vehicle closest to the geographical starting point 101 and higher for the vehicles located further away from the geographical start point 101. It is assumed that the expected power consumption for relocating each vehicle A, B, C to the geographical start point 101 is 100 kWh for the first vehicle A, 10 kWh for the second vehicle B, and 30 kWh for the third vehicle C.

Accordingly, based on the received vehicle information and route information, the controller is configured to determine (or estimate) a number of required charge cycles for each electric vehicle for each separate geographical road route. In the present example, a 250 kWh battery capacity is assumed for each vehicle A, B, C. In order to further improve the accuracy of the estimation of the number of required charge cycles for each electric vehicle, the controller may be configured to retrieve historical data about energy consumption for each vehicle A, B, C as well as weight of the cargo (current weight as well as total including the package to be picked up). Thus, continuing with the above discussed example, the determined charge cycles are presented in Table 1 below.

**Table 1: Required charge cycles for each vehicle to complete each route.**

| Route\Vehicle | A | B | C |
|---|---|---|---|
| 201 | 0,96 | 0,6 | 0,68 |
| 202 | 0,9 | 0,54 | 0,62 |
| 203 | 1,3 | 0,94 | 1,02 |

Further, a geographical road route 201, 202, 203 and an electric vehicle A, B, C for carrying out the transport assignment is assigned by the controller 10. The assignment is, based on the number of required charge cycles, and performed such that the assigned electric vehicle A, B, C is selected from a sub-group of electric vehicles which can complete the transport assignment with a number of charge cycles that is below a predefined threshold (dynamic or static). Preferably, the controller is configured to select the geographical road route 201, 202, 203 and the electric vehicle A, B, C which results in the lowest number of charge cycles.

The predefined charge cycle threshold may be set to 1 resulting in that two of the above nine options are unavailable. As mentioned, there may be other constraints such as delivery time, re-charging needs, operator availability (in-case of semi-autonomous vehicles) which will further affect the available options. In the present example, the second electric vehicle B will need to be re-charged, thus it will need to pass via the charging station 22, and is therefore constricted to the third route 203. However, the transport assignment includes a time range for pick-up and a time range for delivery, and the second vehicle B will not be able to complete the delivery in a timely manner since it can't stay within the time range for delivery, rendering vehicle B unavailable after these constraints (re-charging and delivery time) have been considered.

Further, the second route 202 includes a passage 12 which passes by a school 31 and therefore requires operational assistance, and in this example, there will be no available assistance during the time slot that the third vehicle C is expected to pass through this passage 12 along the second route 202, wherefore this option is determined as unavailable by the controller 10 as well. Consequently, based on the above, the resulting assigned electric vehicle and route are the third vehicle C and first route 201, as illustrated in Table 2 below. It should be noted that the values are mere estimations serving to elucidate the inventive concept and not necessarily to scale in reference to the associated figure.

**Table 2: Resulting available options after some contingencies have been evaluated based on Table 1.**

| Route\Vehicle | A | B | C |
|---|---|---|---|
| 201 | **0,96** | | **0,68** |
| 202 | **0,9** | | |
| 203 | | | |

However, as mentioned in the foregoing, the assigning step may be based on additional parameters as already exemplified. For example, the received transport assignment discussed above, i.e. from the first building 101 to the end point 200, may be added to a list 300 comprising one or more pending transport assignments. In more detail, the pending transport assignment may be from a different geographical start point, e.g. a second pick-up location 102 to the same geographical end point, i.e. warehouse 200. Thus, the controller 10 may be configured to account for a plurality of transport assignments, included in the list 300, when assigning a geographical road route and an electric vehicle for carrying out the transport assignment, such that the total number of charge cycle for all transport assignments is below a predefined threshold. In this example, the controller 10 is configured to take the lowest number of total charge cycles for completing both transport assignments.

For the sake of brevity, the possible options for completing the second transport assignment are limited to two, namely by means of the third vehicle C using a single route (not shown) or by means of the first vehicle A using a different single route (not shown). Here we can assume that the determined number of charge cycles for the first vehicle is 1,2 and for the third vehicle C the determined number of charge cycles is 0,5. Accordingly, based on these additional parameters and the prerequisite that the vehicles and routes resulting in the lowest number of total charge cycles for completing both transport assignments are to be selected, the controller is configured to assign the first vehicle A and the second route 202 for the first transport assignment (from the first building 101 to the warehouse 200) and the third vehicle C and the single route (not shown) for the second transport assignment (from the second building 102 to the warehouse 200). This accordingly results in a total number of charge cycles of 1,4 as compared to 1,88 if the third vehicle would have been used for the first transport assignment and the first vehicle A for the second transport assignment.

Thus, by including pending transport assignments when assigning an electric vehicle A, B, C and a road route 201, 202, 203, the lifetime of the battery packs of the vehicles can be even further increased, thereby reducing vehicle maintenance needs and saving costs.

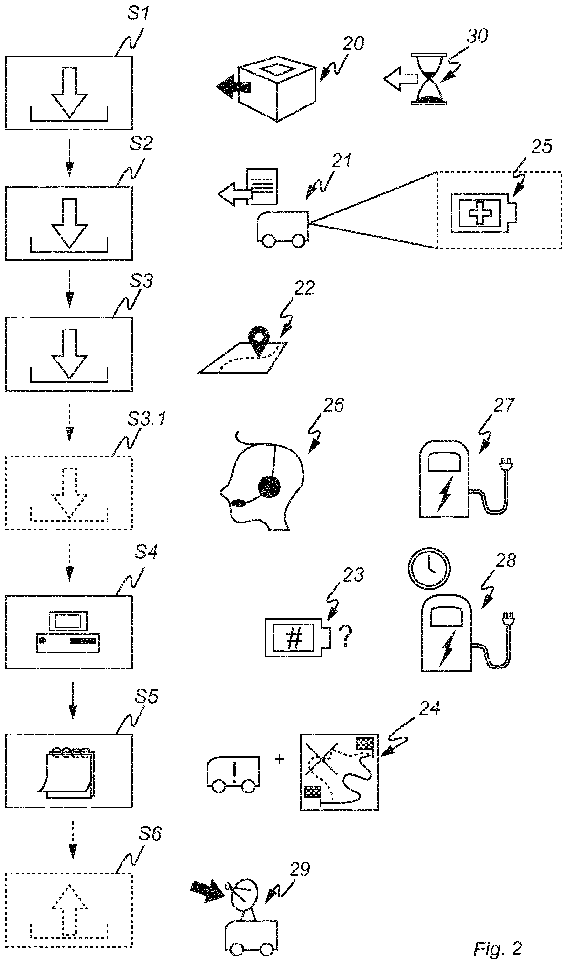

Fig. 2 is a flow chart representation of a method for transport assignment planning in accordance with an embodiment of the present invention. The method includes receiving S1 a transport assignment 20, where the transport assignment 20 comprises a geographical start point and a geographical end point. Moreover, the transport assignment may include a time range for pickup and a time range for delivery, as illustrated by the hourglass 30.

Further, the method includes a step of receiving S2 vehicle information 21 about the status of a plurality of electric vehicles in a vehicle fleet, each vehicle having at least one battery pack. The vehicle information 21 comprises at least a state of charge for each battery pack (each vehicle). However, the vehicle information 21 may further include state of health 25 for each battery pack, current or expected position of the electric vehicle, freight capacity, etc.

Next, the method includes a step of receiving route information 22 about a plurality of geographical road routes between the geographical start point and the geographical end point. The route information 22 comprises information about expected power consumption and may also include information about available charging stations close to each geographical road route. Based on the received S2 vehicle information 21 and the received S3 route information 22, a number of required charge cycles 23 for each electric vehicle is determined S4. Additionally, in some embodiments, estimated charging time 28 may be determined in this step S4.

Further, there is a step of assigning S5 a geographical road route and an electric vehicle 24 for carrying out the transport assignment based on the determined S4 number of required charge cycles 23 such that the assigned electric vehicle is selected from a sub-group of electric vehicles (in the vehicle fleet) which can complete the transport assignment 20 with a number of charge cycles that is below a predefined threshold. Furthermore, the assignment S5 of a geographical road route and an electric vehicle for carrying out the transport assignment 20 may be such that the assigned electric vehicle is the electric vehicle which can complete the transport assignment 20 with the lowest number of charge cycles out of the plurality of electric vehicles.

However, in order to further improve accuracy of the estimated number of charge cycles 23, the method may further comprise a step of receiving S3.1 additional parameters or additional information (such as e.g. assistance availability information 26 and charging station data 27, other pending transport assignments).

For example, at least one of the plurality of electric vehicles may be semi-autonomous, meaning that they are generally autonomous but may be momentarily operated by a remote operator. Accordingly, the route information may further include information about each of the geographical road routes where there is a need for remote assistance, such the assigning S5 a geographical road route and electric vehicle is further based on the received assistance availability information 26.

Further, the method may comprise an additional step of sending S6 information about the transport assignment and information about the assigned geographical road route to the assigned electric vehicle 29. This communication may either be targeted or broadcasted to all the vehicles associated with the system controller in order to increase redundancy.

The invention has now been described with reference to specific embodiments. However, several variations of the electrical motor control system and method are feasible. As already exemplified, other parameters may be added in the evaluation and assignment in order to select a preferred vehicle A, B, C from the sub-group such as e.g. state of health for the batteries, pending transport assignments, delivery times, etc. Such and other obvious modifications must be considered to be within the scope of the present invention, as it is defined by the appended claims. It should be noted that the above-mentioned embodiments illustrate rather than limit the invention, and that those skilled in the art will be able to design many alternative embodiments without departing from the scope of the appended claims.

## Claims

1. A method for transport assignment planning comprising:
receiving (S1) a transport assignment (20), wherein the transport assignment comprises a geographical start point and a geographical end point;
receiving (S2) vehicle information (21) about the status of a plurality of electric vehicles (A, B, C) in a vehicle fleet, each vehicle comprising at least one battery pack, wherein the vehicle information comprises a state of charge for each battery pack;
receiving (S3) route information (22) about a plurality of geographical road routes (201, 202, 203) between the geographical start point and the geographical end point, wherein the route information comprises information about expected power consumption for each vehicle for each geographical road route;
**characterized in that** the method further comprises:
determining (S4) a number of required charge cycles (23) for each electric vehicle for each geographical road route based on said received vehicle information and said route information; and
assigning (S5) a geographical road route and an electric vehicle for carrying out the transport assignment based on the determined number of required charge cycles such that the assigned electric vehicle is selected from a sub-group of electric vehicles which can complete the transport assignment with a number of charge cycles that is below a predefined threshold.

2. The method according to claim 1, wherein the step of assigning (S5) a geographical road route and an electric vehicle for carrying out the transport assignment is such that the assigned electric vehicle is the electric vehicle which can complete the transport assignment with a lowest number of charge cycles out of the plurality of electric vehicles.

3. The method according to claim 1 or 2, further comprising:
sending (S6) information about the transport assignment and information about the assigned geographical road route to the assigned electric vehicle (29).

4. The method according to any one of the preceding claims, wherein the route information (22) is retrieved from a database.

5. The method according to any one of the preceding claims, wherein the vehicle information (21) further comprises a state of health (25) for each battery pack.

6. The method according to any one of the preceding claims, wherein at least one of the plurality of electric vehicles (A, B, C) is/are semi-autonomous and wherein the route information further comprises information about portions of each of the geographical road routes where there is a need for remote assistance, the method further comprising:
receiving (S3.1) assistance availability information (26) comprising information about an availability of remote assistance, and
wherein the step of assigning (S5) a geographical road route is further based on the received assistance availability information and the received route information.

7. The method according to any one of the preceding claims, wherein the transport assignment (20) comprises information about the freight and wherein the vehicle information (21) further comprises information about freight capacity.

8. The method according to any one of the preceding claims, wherein the transport assignment (20) comprises a time range for pickup and a time range for delivery, and wherein said method further comprises:
evaluating which of said plurality of electric vehicles (A, B, C) are capable of performing the transport assignment using which geographical road route(s) (201, 202, 203) within said time range for pickup and said time range for delivery.

9. The method according to any one of the preceding claims, further comprising:
receiving (S3.1) charging station data (27) comprising information about availability at each charging station present along each geographical road route;
estimating (S4) a required charging time (28) for each electric vehicle based on said vehicle information and said route information;
wherein said step of assigning (S5) a geographical road route and an electric vehicle is further based on said estimated required charging time and said charging station data.

10. The method according to any one of the preceding claims, further comprising receiving information about electricity prices, and
wherein the step of assigning (S5) a geographical road route and an electric vehicle is further based on said information about electricity prices such that the total cost of the transport assignment is below a predefined threshold.

11. The method according to any one of the preceding claims, wherein the vehicle information (21) comprises information about a current position or expected position of each electric vehicle (A, B, C), and wherein said geographical road routes include relocating each of said electric vehicles from the current position or the expected position to said geographical start point.

12. The method according to any of the preceding claims, further comprising:
adding the received transport assignment to a list (300) comprising at least one transport assignment, and
wherein the step of assigning (S5) a geographical road route and an electric vehicle (A, B, C) for carrying out the transport assignment (20) is carried out for all the transport assignments in said list such that a total number of charge cycles for all transport assignments is below a predefined threshold.

13. A system for transport assignment planning comprising a controller (10) configured to:
receive a transport assignment (20), wherein the transport assignment comprises a geographical start point a geographical end point;
receive vehicle information (21) about the status of a plurality of electric vehicles (A, B, C) in a vehicle fleet, each vehicle comprising at least one battery pack, wherein the vehicle information comprises a state of charge for each battery pack;
receive route information (22) about a plurality of geographical road routes (201, 202, 203) between the geographical start point and the geographical end point, wherein the route information comprises information about expected power consumption for each vehicle for each geographical road route;
**characterized in that** the controller is further configured to:
determine a number of required charge cycles (23) for each electric vehicle for each geographical road route based on said received vehicle information and said route information; and
assign a geographical road route and an electric vehicle for carrying out the transport assignment (20) based on the determined number of required charge cycles such that the assigned electric vehicle (29) is selected from a sub-group of electric vehicles which can complete the transport assignment (20) with a number of charge cycles that is below a predefined threshold.

14. The system according to claim 13, wherein said control unit (10) is further configured to send information about the transport assignment (20) and information about the assigned route to the assigned electric vehicle (29).

15. The system according to claim 13 or 14, further comprising a database comprising said route information about said plurality of geographical road routes.

## Patentansprüche

1. Verfahren zur Transportauftragsplanung umfassend:
Empfangen (S1) eines Transportauftrags (20), wobei der Transportauftrag einen geografischen Startpunkt und einen geografischen Endpunkt umfasst;
Empfangen (S2) von Fahrzeuginformationen (21) über den Status einer Vielzahl von Elektrofahrzeugen (A, B, C) in einer Fahrzeugflotte, wobei jedes Fahrzeug mindestens ein Batteriepack umfasst, wobei die Fahrzeuginformationen einen Ladezustand für jedes Batteriepack umfassen;
Empfangen von (S3) Routeninformationen (22) über eine Vielzahl von geografischen Straßenrouten (201, 202, 203) zwischen dem geografischen Startpunkt und dem geografischen Endpunkt, wobei die Routeninformationen Informationen über den erwarteten Stromverbrauch für jedes Fahrzeug für jede geografische Straßenroute umfassen;
**dadurch gekennzeichnet, dass** das Verfahren ferner umfasst:
Bestimmen (S4) einer Anzahl erforderlicher Ladezyklen (23) für jedes Elektrofahrzeug für jede geografische Straßenroute basierend auf den erhaltenen Fahrzeuginformationen und den Routeninformationen; und
Zuweisen (S5) einer geografischen Straßenroute und eines Elektrofahrzeugs zur Durchführung des Transportauftrags anhand der ermittelten Anzahl von erforderlichen Ladezyklen, so dass das zugewiesene Elektrofahrzeug ausgewählt wird aus einer Untergruppe von Elektrofahrzeugen, die den Transportauftrag mit einer Anzahl von Ladezyklen erfüllen können, die unter einem vordefinierten Schwellenwert liegt.

2. Verfahren nach Anspruch 1, wobei der Schritt der Zuordnung (S5) einer geografischen Straßenroute und eines Elektrofahrzeugs zur Durchführung des Transportauftrags so ist, dass das zugewiesene Elektrofahrzeug das elektrische Fahrzeug ist, das den Transportauftrag mit einer niedrigsten Anzahl an Ladezyklen aus der Vielzahl von Elektrofahrzeugen abschließen kann.

3. Verfahren nach Anspruch 1 oder 2, ferner umfassend: Senden von (S6) Informationen über den Transportauftrag und Informationen über die zugewiesene geografische Straßenroute zum zugewiesenen Elektrofahrzeug (29).

4. Verfahren nach einem der vorhergehenden Ansprüche, wobei die Routeninformationen (22) aus einer Datenbank abgerufen werden.

5. Verfahren nach einem der vorhergehenden Ansprüche, wobei die Fahrzeuginformationen (21) ferner einen Gesundheitszustand (25) für jedes Batteriepack umfassen.

6. Verfahren nach einem der vorhergehenden Ansprüche, wobei mindestens eines der mehreren Elektrofahrzeuge (A, B, C) halbautonom ist / sind und wobei die Routeninformationen ferner Informationen über Teile jeder der geografischen Straßenrouten umfassen, bei denen ein Bedarf für Fernunterstützung besteht, das Verfahren umfasst ferner:
Empfangen (S3.1) von Informationen (26) zur Verfügbarkeit von Unterstützung umfassend Informationen über die Verfügbarkeit von Fernunterstützung und wobei der Schritt des Zuweisens (S5) einer geografischen Straßenroute ferner auf den empfangenen Unterstützungsverfügbarkeitsinformationen und den empfangenen Routeninformationen basiert.

7. Das Verfahren nach einem der vorhergehenden Ansprüche, wobei die Transportzuordnung (20) Informationen über die Fracht umfasst und wobei die Fahrzeuginformationen (21) ferner Informationen über Frachtkapazität umfassen.

8. Das Verfahren nach einem der vorhergehenden Ansprüche, wobei die Transportzuordnung (20) einen Zeitbereich für die Abholung und einen Zeitbereich für die Lieferung umfasst, wobei das Verfahren ferner umfasst:
Bewertung, welche der mehreren Elektrofahrzeuge (A, B, C) in der Lage sind, die Transportzuweisung unter Verwendung der geografischen Straßenroute (n) (201, 202, 203) innerhalb des Zeitbereichs für die Abholung und des Zeitbereichs für die Lieferung durchzuführen.

9. Das Verfahren nach einem der vorhergehenden Ansprüche, ferner umfassend:
Empfangen (S3.1) von Ladestationsdaten (27), die Informationen zur Verfügbarkeit an jeder Ladestation entlang jeder geografischen Straßenroute enthalten;
Schätzen (S4) einer erforderlichen Ladezeit (28) für jedes Elektrofahrzeug basierend auf den Fahrzeuginformationen und den Routeninformationen;
wobei der Schritt des Zuweisens (S5) einer geografischen Straßenroute und eines Elektrofahrzeugs ferner auf der geschätzten erforderlichen Ladezeit und den Ladestationsdaten basiert.

10. Das Verfahren nach einem der vorhergehenden Ansprüche, ferner umfassend das Empfangen von Informationen über Strompreise und wobei der Schritt des Zuweisens (S5) einer geografischen Straßenroute und eines Elektrofahrzeugs ferner auf diesen Informationen über Strompreise basiert, so dass die Gesamtkosten des Transportauftrags unter einem vordefinierten Schwellenwert liegen.

11. Verfahren nach einem der vorhergehenden Ansprüche, wobei die Fahrzeuginformationen (21) Informationen über eine aktuelle Position oder erwartete Position jedes Elektrofahrzeugs (A, B, C) umfassen und wobei die geografischen Straßenrouten das Bewegen jedes der Elektrofahrzeuge von der aktuellen Position oder der erwarteten Position zum geografischen Startpunkt umfassen.

12. Verfahren nach einem der vorhergehenden Ansprüche, ferner umfassend:
Hinzufügen des empfangenen Transportauftrags zu einer Liste (300), die mindestens einen Transportauftrag umfasst, und
wobei der Schritt des Zuweisens (S5) einer geografischen Straßenroute und eines Elektrofahrzeugs (A, B, C) zur Durchführung des Transportauftrags (20) für alle Transportaufträge in dieser Liste so ausgeführt ist, dass die Anzahl der Ladezyklen für alle Transportaufträge insgesamt unter einem vordefinierten Schwellenwert liegt.

13. System zur Transportauftragsplanung, umfassend eine Steuerung (10) konfiguriert um:
einen Transportauftrag (20) erhalten, wobei der Transportauftrag einen geografischen Startpunkt und einen geografischen Endpunkt umfasst;
Fahrzeuginformationen (21) über den Status mehrerer elektrischer Elektrofahrzeuge (A, B, C) in einer Fahrzeugflotte zu erhalten, wobei jedes Fahrzeug mindestens ein Batteriepack umfasst, wobei die Fahrzeuginformationen einen Ladezustand für jedes Batteriepack umfassen;
Routeninformationen (22) über mehrere geografische Straßenrouten (201, 202, 203) zwischen dem geografischen Startpunkt und dem geografischen Endpunkt zu erhalten, wobei die Routeninformationen Informationen über den erwarteten Stromverbrauch für jedes Fahrzeug für jede geografische Straßenroute umfassen;
**dadurch gekennzeichnet, dass** die Steuerung ferner konfiguriert ist um:
eine Anzahl erforderlicher Ladezyklen (23) für jedes Elektrofahrzeug für jede geografische Straßenroute basierend auf den empfangenen Fahrzeuginformationen und den Routeninformationen zu bestimmen; und
eine geografische Straßenroute und ein Elektrofahrzeug zum Erfüllen des Transportauftrags (20) zuzuweisen, basierend auf der bestimmten Anzahl erforderlicher Ladezyklen, so dass das zugewiesene Elektrofahrzeug (29) aus einer Untergruppe von Elektrofahrzeugen ausgewählt wird, die den Transportauftrag (20) mit einer Anzahl von Ladezyklen, die unter einem vordefinierten Schwellenwert liegt, durchführen können.

14. System nach Anspruch 13, wobei die Steuereinheit (10) ferner konfiguriert ist, um Informationen über den Transportauftrag (20) und Informationen über die zugewiesene Route zu dem zugewiesenen Elektrofahrzeug (29) zu senden.

15. Das System nach Anspruch 13 oder 14 ferner umfassend eine Datenbank, wobei die Datenbank Routeninformationen über die Vielzahl der geografischen Straßenrouten umfasst.

## Revendications

1. Procédé de planification de mission de transport comprenant :
recevoir (S1) une mission de transport (20), dans lequel la mission de transport comprend un point de départ géographique et un point d'arrivée géographique ;
recevoir (S2) des informations de véhicule (21) sur l'état d'une pluralité de véhicules électriques (A, B, C) dans un parc de véhicules, chaque véhicule comprenant au moins un bloc-batterie, dans lequel les informations de véhicule comprennent un état de charge pour chaque bloc-batterie ;
recevoir (S3) des informations d'itinéraire (22) concernant une pluralité d'itinéraires routiers géographiques (201, 202, 203) entre le point de départ géographique et le point d'arrivée géographique, les informations d'itinéraire comprenant des informations sur la consommation d'énergie prévue pour chaque véhicule pour chaque itinéraire routier géographique;
**caractérisé en ce que** le procédé comprend en outre :
déterminer (S4) un nombre de cycles de charge requis (23) pour chaque véhicule électrique pour chaque itinéraire routier géographique sur la base desdites informations de véhicule reçues et desdites informations d'itinéraire ; et
affecter (S5) un itinéraire routier géographique et un véhicule électrique pour effectuer la mission de transport sur la base du nombre déterminé de cycles de charge requis de telle sorte que le véhicule électrique affecté soit sélectionné dans un sous-groupe de véhicules électriques qui peuvent terminer la mission de transport avec un nombre de cycles de charge inférieur à un seuil prédéfini.

2. Procédé selon la revendication 1, dans lequel l'étape d'affectation (S5) d'un itinéraire routier géographique et d'un véhicule électrique pour effectuer la mission de transport est telle que le véhicule électrique affecté est le véhicule électrique qui peut terminer la mission de transport avec un nombre le plus bas de cycles de charge parmi la pluralité de véhicules électriques.

3. Procédé selon la revendication 1 ou 2, comprenant en outre :
envoyer (S6) des informations sur la mission de transport et des informations sur l'itinéraire routier géographique affecté au véhicule électrique affecté (29).

4. Procédé selon l'une quelconque des revendications précédentes, dans lequel les informations d'itinéraire (22) sont extraites d'une base de données.

5. Procédé selon l'une quelconque des revendications précédentes, dans lequel les informations de véhicule (21) comprennent en outre un état de santé (25) pour chaque bloc-batterie.

6. Procédé selon l'une quelconque des revendications précédentes, dans lequel au moins l'un de la pluralité de véhicules électriques (A, B, C) est / sont semi-autonomes et dans lequel les informations d'itinéraire comprennent en outre des informations sur des parties de chacun des itinéraires routiers géographiques où il existe un besoin d'assistance à distance, le procédé comprenant en outre :
recevoir (S3.1) des informations de disponibilité d'assistance (26) comprenant des informations sur une disponibilité d'assistance à distance, et
dans lequel l'étape d'affectation (S5) d'un itinéraire routier géographique est en outre basée sur les informations de disponibilité d'assistance reçues et les informations d'itinéraire reçues.

7. Procédé selon l'une quelconque des revendications précédentes, dans lequel la mission de transport (20) comprend des informations sur le fret et dans lequel les informations de véhicule (21) comprennent en outre des informations sur la capacité de fret.

8. Procédé selon l'une quelconque des revendications précédentes, dans lequel la mission de transport (20) comprend une plage de temps pour le ramassage et une plage de temps pour la livraison, et dans lequel ledit procédé comprend en outre :
évaluer lesquels de ladite pluralité de véhicules électriques (A, B, C) sont capables d'effectuer la mission de transport en utilisant quel(s) itinéraire(s) routier(s) géographique(s) (201, 202, 203) dans ladite plage de temps pour le ramassage et ladite plage de temps pour la livraison.

9. Procédé selon l'une quelconque des revendications précédentes, comprenant en outre :
recevoir (S3.1) des données de station de charge (27) comprenant des informations sur la disponibilité à chaque station de charge présente le long de chaque itinéraire routier géographique ;
estimer (S4) un temps de charge requis (28) pour chaque véhicule électrique sur la base desdites informations de véhicule et desdites informations d'itinéraire ;
dans lequel ladite étape d'affectation (S5) d'un itinéraire routier géographique et d'un véhicule électrique est en outre basée sur ledit temps de charge requis estimé et lesdites données de station de charge.

10. Procédé selon l'une quelconque des revendications précédentes, comprenant en outre la réception d'informations sur des prix de l'électricité, et
dans lequel l'étape d'affectation (S5) d'un itinéraire routier géographique et d'un véhicule électrique est en outre basée sur lesdites informations sur des prix de l'électricité de telle sorte que le coût total de la mission de transport soit inférieur à un seuil prédéfini.

11. Procédé selon l'une quelconque des revendications précédentes, dans lequel les informations de véhicule (21) comprennent des informations sur une position actuelle ou une position attendue de chaque véhicule électrique (A, B, C), et dans lequel lesdits itinéraires routiers géographiques comprennent le déplacement de chacun desdits véhicules électriques de la position actuelle ou de la position attendue audit point de départ géographique.

12. Procédé selon l'une quelconque des revendications précédentes, comprenant en outre :
ajouter la mission de transport reçue à une liste (300) comprenant au moins une mission de transport, et
dans lequel l'étape d'affectation (S5) d'un itinéraire routier géographique et d'un véhicule électrique (A, B, C) pour effectuer la mission de transport (20) est effectuée pour toutes les missions de transport dans ladite liste de sorte qu'un nombre total de cycles de charge pour toutes les missions de transport est inférieur à un seuil prédéfini.

13. Système de planification de mission de transport comprenant une unité de commande (10) configurée pour :
recevoir une mission de transport (20), dans lequel la mission de transport comprend un point de départ géographique un point d'arrivée géographique ;
recevoir des informations de véhicule (21) sur l'état d'une pluralité de véhicules électriques (A, B, C) dans un parc de véhicules, chaque véhicule comprenant au moins un bloc-batterie, dans lequel les informations de véhicule comprennent un état de charge pour chaque bloc-batterie ;
recevoir des informations d'itinéraire (22) concernant une pluralité d'itinéraires routiers géographiques (201, 202, 203) entre le point de départ géographique et le point d'arrivée géographique, les informations d'itinéraire comprenant des informations sur la consommation d'énergie prévue pour chaque véhicule pour chaque itinéraire routier géographique ;
**caractérisé en ce que** l'unité de commande est en outre configuré pour :
déterminer un nombre de cycles de charge requis (23) pour chaque véhicule électrique pour chaque itinéraire routier géographique sur la base desdites informations de véhicule reçues et desdites informations d'itinéraire ; et
affecter un itinéraire routier géographique et un véhicule électrique pour effectuer la mission de transport (20) sur la base du nombre déterminé de cycles de charge requis de telle sorte que le véhicule électrique affecté (29) soit sélectionné dans un sous-groupe de véhicules électriques qui peuvent terminer la mission de transport (20) avec un nombre de cycles de charge inférieur à un seuil prédéfini.

14. Système selon la revendication 13, dans lequel ladite unité de commande (10) est en outre configurée pour envoyer des informations sur la mission de transport (20) et des informations sur l'itinéraire affecté au véhicule électrique affecté (29).

15. Système selon la revendication 13 ou 14, comprenant en outre une base de données comprenant lesdites informations d'itinéraire concernant ladite pluralité d'itinéraires routiers géographiques.
